# EUROPÄISCHE PATENTSCHRIFT

(11) **EP 2 891 010 B1**
(45) Veröffentlichungstag und Bekanntmachung des Hinweises auf die Patenterteilung: **01.06.2016**
(21) Anmeldenummer: 13756856.4
(22) Anmeldetag: 28.08.2013
(51) Int. Cl.: G02C 11/00, A45D 44/22

(54) **VORRICHTUNG ZUR STRAFFUNG DER GESICHTSHAUT**
DEVICE FOR TAUTENING FACIAL SKIN
DISPOSITIF POUR TENDRE LA PEAU DU VISAGE

(30) Priorität: 30.08.2012 AT 9512012
(43) Veröffentlichungstag der Anmeldung: 08.07.2015
(73) Patentinhaber: Offner, Johanna, 1190 Wien (AT)
(72) Erfinder: Offner, Johanna, 1190 Wien (AT)
(74) Vertreter: Patentanwälte Puchberger, Berger und Partner
(86) Internationale Anmeldenummer: PCT/EP2013/067760
(87) Internationale Veröffentlichungsnummer: WO 2014/033146

(56) Entgegenhaltungen:
- CN-A- 102 426 408
- DE-U- 7 020 296
- FR-A- 1 131 789
- JP-A- 2009 291 453
- US-A- 2 068 777
- US-A- 3 675 991

## Beschreibung

Die Erfindung betrifft eine Mehrzweckvorrichtung mit einem oder mehreren am Kopf eines Benutzers anlegbaren Tragteilen und vorzugsweise mit einer Sehhilfe und/oder einer Hörhilfe, wobei zumindest ein Tragteil eine Spannvorrichtung zur Straffung der Gesichtshaut des Benutzers aufweist, wobei die Spannvorrichtung mit dem Tragteil verbunden oder verbindbar und um eine Drehachse schwenkbar ist.

Um erschlaffte Gesichtsmuskeln dauerhaft zu spannen, werden üblicherweise gesichtschirurgische Operationen durchgeführt. Diese Eingriffe sind mit hohen Kosten verbunden, wobei auch unerwünschte Nebenerscheinungen und Spätfolgen nicht zu vermeiden sind. Da von älteren Personen ein jüngeres Aussehen meist nur kurzfristig bei öffentlichen Anlässen angestrebt wird, können die bekannten Nachteile mit der gegenständlichen Erfindung vermieden werden.

Zum bekannten Stand der Technik gehören Brillengestelle in beliebig kräftiger Ausführung. Insbesondere für die seitlichen Stangen zwischen der Sehhilfe und den Ohrbügeln sind schon sehr breite Leisten üblich geworden. Bekannt sind weiters Brillengestelle mit mehreren Gliedern, mit Steckverbindungen oder Gelenken zwischen den Gliedern, sowie mit dehnbaren Gliedern.

Beispielsweise beschreibt die DE 20 2006 011493 U1 eine Brille zur Bekämpfung von Falten, bei der am Brillenbügel Pads angebracht sind, die bei aufgesetzter Brille an Schläfe bzw. Augenwinkel des Benutzers anliegen und die Gesichtshaut in diesem Bereich straffen. Andere Vorrichtung mit dieser Funktion sind bekannt aus DE 7 020 296 U, JP 2009 291 453, US 2 068 777, FR 1 131 789 und US 3 675 991.

Um eine Straffung der Gesichtshaut zu erzielen, muss sowohl Druck auf die Gesichtsmuskeln, als auch eine Zugspannung nach hinten erzeugt werden. Dies wird mit teleskopartig ausziehbaren Brillenbügeln erzielt. Im Inneren der Brillenbügel befindet sich eine Feder, die mit den Pads verbunden ist. Beim Aufsetzen der Brille wird die Feder gespannt, und die Pads bewirken, dass die Gesichtshaut durch leichten Zug nach hinten gestrafft wird.

Als weiterer Stand der Technik sind Vorrichtungen zum Glätten der Gesichtshaut bzw. der Lachfalten an den Mundwinkeln bekannt geworden, die vom Hinterkopf oder Nacken her wirksam sind. Diese bekannten Vorrichtungen haben den Nachteil eines relativ komplizierten Aufbaus, da der gesamte Brillenbügel teleskopartig aufgebaut sein muss, und im Inneren des Brillenbügel ein Dehnmechanismus vorgesehen sein muss. Eine Verwendung der Vorrichtung für bestehende Brillengestelle ist nicht möglich.

Aufgabe der vorliegenden Erfindung ist es, eine Vorrichtung zu Straffung der Gesichtshaut und der Jochbeinmuskulatur (zygomaticus major und zygomaticus minor) des Benutzers zu schaffen, die einfach in Aufbau und Herstellung, und gleichzeitig robust und haltbar in der Benutzung ist, wobei eine Justierung des Straffungsdrucks bzw. der Straffungsstärke vor und während der Benutzung der Vorrichtung möglich ist. Die Spannvorrichtung soll vorzugsweise möglichst geringe Sichtbarkeit aufweisen.

Diese Aufgabe wird erfindungsgemäß dadurch gelöst, dass die Spannvorrichtung einen Spannbügel und ein den Spannbügel spannendes Federelement umfasst, wobei der Spannbügel auf der dem Kopf des Benutzers zugewandten Seite des Tragteils angeordnet ist und das Federelement einerseits mit dem Tragteil und andererseits mit dem Spannbügel in Eingriff steht.

Beim Anlegen einer derartigen Vorrichtung wird zunächst die Spannvorrichtung manuell betätigt (die Spannbügel werden durch eine Rotation nach unten gezogen) und dann die Mehrzweckvorrichtung angebracht. Durch das Federelement werden die Gesichtshaut und die Jochbeinmuskeln erfasst und nach oben sowie nach hinten mitgenommen, wodurch der erwünschte Straffungseffekt erzielt wird. Dadurch werden die Gesichtshaut und/oder die Jochbeinmuskeln unter elastischer Anspannung gehalten.

Als Betätigungselement der Spannvorrichtung dient in diesem Fall der Spannbügel selbst, somit ist kein eigenes Betätigungselement erforderlich.

Erfindungsgemäß kann das Federelement als Spiraldrehfeder oder als Drehdruckfeder ausgeführt sein. Das Federelement kann an der dem Kopf des Benutzers zugewandten Seite des Tragteils angeordnet sein, um zu verhindern, dass die Spannvorrichtung von außen sichtbar ist. Bei Verwendung einer erfindungsgemäßen Drehdruckfeder ergibt sich der Vorteil, dass bei der Benutzung sowohl eine Druckkraft, als auch eine Zugkraft auf das Gesicht des Benutzers ausgeübt wird.

Das Federelement kann auch auf der dem Kopf des Benutzers abgewandten Seite des Tragteils angeordnet sein, wobei in diesem Fall vorzugsweise ein, das Federelement überdeckendes, mit dem Spannbügel in Eingriff stehendes Betätigungselement, insbesondere in Form eines Drehgriffs, vorgesehen ist.

Die erfindungsgemäße Drehdruckfeder kann eine innenliegende Befestigungsplatte, einen Rahmen sowie vorzugsweise drei Arme umfassen, welche die Befestigungsplatte mit dem Rahmen verbinden. Die Arme sind vorzugsweise elastisch ausgeführt und halten den Befestigungsteil in einem vordefinierten Abstand senkrecht zur Ebene des Rahmens. Dadurch wird ermöglicht, dass durch Ausüben eines Drucks auf die Befestigungsplatte diese eine rotatorische Bewegung vollzieht und unter elastische Spannung gesetzt wird. Es sind auch Ausführungsformen mit mehr als drei Armen vorgesehen. Die Arme sind über einen bestimmten Winkelbereich gebogen, der den Winkelbereich der rotatorischen Bewegung der Befestigungsplatte bestimmt.

Die Drehdruckfeder kann an der Befestigungsplatte mit dem Tragteil der Mehrzweckvorrichtung verbunden sein, und an ihrem Rahmen mit dem Spannbügel verbunden sein. Bei der Betätigung der Spannvorrichtung muss der Benutzer lediglich den Spannbügel mit der Hand gegen den Tragteil drücken. Dadurch vollzieht der Spannbügel von selbst eine rotatorische Bewegung und wird unter elastische Spannung gesetzt. Bei Benutzung übt der Spannbügel durch die erfindungsgemäße Drehdruckfeder sowohl Druck, als auch Zugkräfte auf das Gesicht des Benutzers aus.

Während der Benutzung kann die Spannung des Spannbügels jederzeit nachjustiert werden. Besonders vorteilhaft ist es, wenn die Drehdruckfeder mit dem Spannbügel einstückig ausgeführt ist, beispielsweise aus einem Blech oder Kunststoff ausgestanzt. Spannbügel und Drehdruckfeder können aber auch mehrteilig sein. Insbesondere kann der Spannbügel einen Draht, einen Kunststoff oder ein Blech umfassen. Die Drehdruckfeder kann ebenfalls einen Draht, einen Kunststoff oder ein Blech, insbesondere einen Federstahl umfassen. Der Spannbügel kann eine zur Versteifung dienende U-förmige Verbiegung aufweisen. Die Drehdruckfeder und der Spannbügel können auch zusammengelötet oder auf andere Art kraftschlüssig oder formschlüssig miteinander verbunden sein.

Die Drehdruckfeder kann am Tragteil angeschraubt, angeklebt oder abnehmbar, beispielsweise mit einem eigens vorgesehenen Bügel, aufgesteckt werden. Weiters kann ein Anschlag, vorzugsweise in Form eines Stiftes, vorgesehen sein, der in eine entsprechende Ausnehmung des Spannbügels eingreift, um dessen Schwenkbewegung zu begrenzen.

Es kann erfindungsgemäß vorgesehen sein, dass die Spannvorrichtung abnehmbar am Tragteil befestigbar und insbesondere aufsteckbar, aufklebbar oder aufschraubbar ist. Dies erlaubt das einfache Nachrüsten bestehender Brillengestelle. Erfindungsgemäß kann vorgesehen sein, dass der Spannbügel zumindest einen an die Gesichtshaut im Bereich des Backenknochens anlegbaren, vorzugsweise elastischen, Klemmbacken aufweist. Es können auch mehrere Klemmbacken am Spannbügel vorgesehen sein, um die Zug- bzw. Druckwirkung zu verstärken.

Damit der Kraftanschluss zwischen dem Klemmbacken und der über dem Jochbeinknochen befindlichen Haut gewährleistet wird, können das Brillengestell und der Bügel entsprechend steif ausgeführt sein. Zudem kann das Brillengestell der Gesichtsform bzw. der Gesichtsbreite angepasst sein.

Die Anbringung des Klemmbackens am Spannbügel kann durch eine kraftschlüssige und/oder formschlüssige Verbindung, beispielsweise durch Kleben, Saugen, Zwicken, Verhaken oder Aufschrumpfen, erfolgen. Die Spannvorrichtung kann im angelegten Zustand verdeckt bzw. für den Betrachter unsichtbar angeordnet sein.

Der Spannbügel kann in Form eines Ohrbügels ausgeführt sein, der schwenkbar an den Tragteilen angebracht oder anbringbar ist. Dadurch wird ermöglicht, dass der erforderliche Ohrbügel zusätzlich die Funktion des Spannbügels erfüllt und somit keine zusätzlichen Bauteile benötigt werden. Zu diesem Zweck kann ein Gelenk zwischen dem Tragteil und dem Ohrbügel vorgesehen sein, wobei eine Drehfeder angeordnet ist, die an einem Ende mit dem Tragteil, insbesondere dem Brillenbügel, und am anderen Ende mit dem Spannbügel oder mit einem Drehgriff verbunden ist.
Die Verbindung der Drehfeder kann kraftschlüssig, formschlüssig oder durch ein Verbindungsmittel wie Klebstoff ausgeführt sein. Das Gelenk kann ein Betätigungselement aufweisen, insbesondere einen Drehgriff zum Betätigen der Spannvorrichtung.

Zur Fixierung der Spannvorrichtung in vorbestimmten Stellungen kann eine lösbare Klemmvorrichtung vorgesehen sein. Indem der Klemmbacken bzw. Klemmbügel der Spannvorrichtung verstellbar fixierbar wird, kann der Anpressdruck auf das Gesicht variiert werden. Die Fixierung der Spannbügel in vorbestimmten Schwenkstellungen kann durch Verrastungen oder Schnappverbindungen erfolgen. Insbesondere kann vorgesehen sein, am Tragteil und am Spannbügel Ausnehmungen vorzusehen, wobei durch Einführen eines Klemmstiftes eine Verrastung in einer beliebigen Schwenkstellung erfolgen kann.

Der seitliche Tragteil, insbesondere Brillenbügel, kann als Abdeckung für die Spannvorrichtung ausgebildet sein. Zum Anspannen der Spannvorrichtung kann der Tragteil einen elastisch dehnbaren oder längs verstellbaren Abschnitt aufweisen. Das Tragteil kann insbesondere aus Teilen bestehen, die ineinander oder aneinander verschiebbar gelagert sind. Der Tragteil kann in Längsrichtung entlang einer Gleitbahn verschiebbar gelagert ist, wobei die Gleitbahn als der aufnehmende Teil einer Streckverbindung ausgebildet ist. Der Tragteil kann aus zwei Elementen bestehen, die mit einem Gelenk schwenkbar verbunden sind, wobei konzentrisch um die Achse des Gelenks eine Drehfeder angeordnet ist, und ein Ende der Drehfeder mit einem an die Gesichtshaut anlegbaren Klemmbacken verbunden ist, und das andere Ende der Drehfeder mit einem Ohrenbügel verbunden ist, wobei zum Anspannen der Spannvorrichtung das hochgeklappte Element des Tragteils zusammen mit dem Ohrenbügel herunterklappbar und hinter der Ohrmuschel anlegbar ist.

Die Mehrzweckvorrichtung kann insbesondere als Brillengestell ausgeführt sein. Eine vorteilhafte Wirkung der Erfindung wird dadurch erzielt, dass die Spannvorrichtung sowie die Haftpolster hinter den Innenseiten von seitlichen Stangen eines Brillengestells angeordnet sind. Dadurch ist die Spannvorrichtung zumindest in angespanntem Zustand verdeckt und für einen Betrachter unsichtbar. Weitere erfindungsgemäße Merkmale ergeben sich aus den Ansprüchen, der Beschreibung und den Zeichnungen.

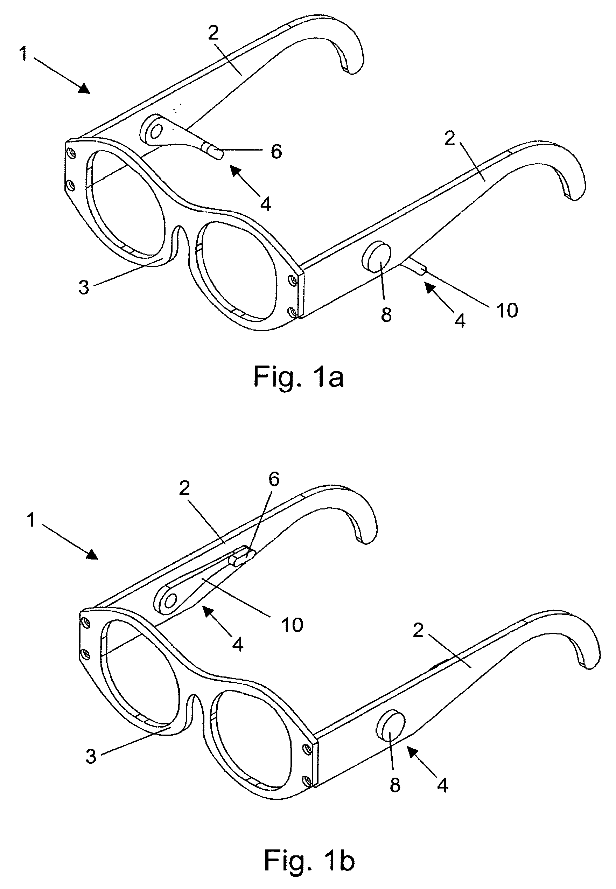

Fig. 1 a zeigt ein Ausführungsbeispiel der erfindungsgemäßen Mehrzweckvorrichtung als Brillengestell in geöffnetem Zustand;
Fig. 1 b zeigt ein Ausführungsbeispiel der erfindungsgemäßen Mehrzweckvorrichtung als Brillengestell in geschlossenem Zustand;
Fig. 2 zeigt den Aufbau der erfindungsgemäßen Spannvorrichtung und dessen Befestigung am Tragteil des Brillengestells;
Fig. 3a und 3b zeigen ein weiteres Ausführungsbeispiel der erfindungsgemäßen Mehrzweckvorrichtung als Brillengestell;
Fig. 4a - 4c zeigen ein weiteres Ausführungsbeispiel der erfindungsgemäßen Mehrzweckvorrichtung unter Verwendung einer Drehdruckfeder;
Fig. 5a - 5c zeigen ein weiteres Ausführungsbeispiel der erfindungsgemäßen Mehrzweckvorrichtung unter Verwendung einer Drehdruckfeder;
Fig. 6a - 6c zeigen Ansichten einer erfindungsgemäß Drehdruckfeder;
Fig. 7a - 7c zeigen ein weiteres Ausführungsbeispiel der erfindungsgemäßen Mehrzweckvorrichtung unter Verwendung einer Spiraldrehfeder;
Fig. 8a - 8c zeigen ein weiteres Ausführungsbeispiel der erfindungsgemäßen Mehrzweckvorrichtung unter Verwendung einer Spiraldrehfeder.

Fig. 1 a zeigt die Mehrzweckvorrichtung 1 in Form eines Brillengestells mit Tragteilen 2 und einer Sehhilfe 3. An den beiden Tragteilen 2 ist jeweils eine Spannvorrichtung 4 angebracht. Die Spannvorrichtung 4 ist drehbar mit den Tragteilen 2 verbunden. In dieser Figur ist die Spannvorrichtung 4 nicht betätigt, die Spannbügeln 10 werden vom Benutzer nach unten gedrückt. An den Spannbügeln 10 der Spannvorrichtung 4 sind Klemmbacken 6 angebracht, welche die Gesichtshaut im betätigten Zustand durch die Kraft einer Drehfeder nach oben ziehen. Die Spannbügeln 10 können durch Betätigung der Drehgriffe 8 angezogen werden.

Fig. 1 b zeigt das Ausführungsbeispiel von Fig. 1 a im betätigten Zustand: Die Spannbügel 10 der Spannvorrichtung 4 drücken nach oben und ziehen die Gesichtshaut entsprechend zurück, um den gewünschten Effekt zu erzielen.

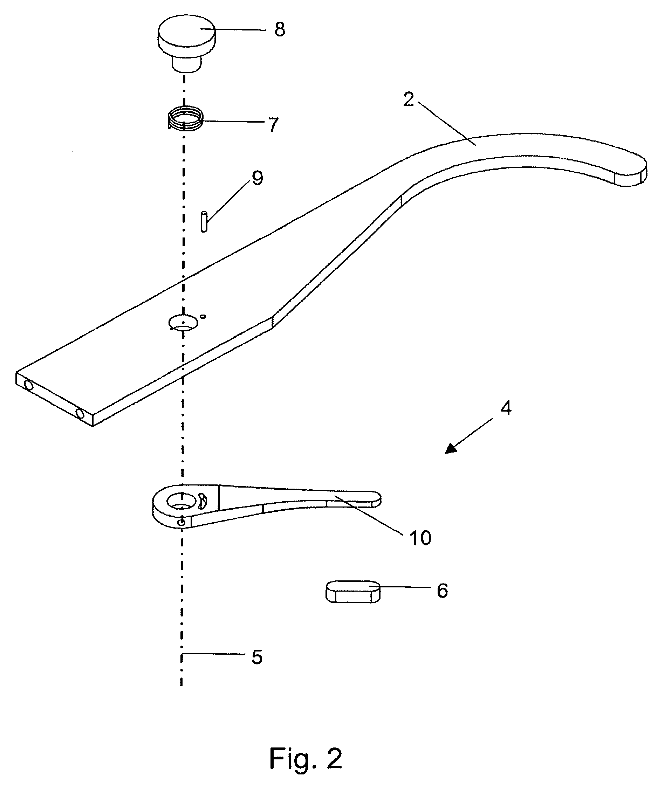

Fig. 2 zeigt den Aufbau der Spannvorrichtung 4 und dessen Befestigung am Tragteil 2 des Brillengestells. Das Tragteil 2 weist zu diesem Zweck eine Ausnehmung auf, in die der Drehgriff 8 einsetzbar ist. Die Drehfeder 7 ist an einem Ende mit dem Drehgriff, und am anderen Ende mit den Tragteil verbunden. Der Drehgriff 8 weist einen Zapfen auf, der mit dem Spannbügel 10 verbunden ist. Dadurch wirkt die Drehfeder direkt auf den Spannbügel 10 und drückt diesen nach oben. Durch den Anschlag 9 in Form eines Fixierungsstiftes wird die Lage des Spannbügels 10 bestimmt. Der Klemmbacken 6 ist an einem Ende des Spannbügels 10 angebracht. Optional kann am Spannbügel 10 im Bereich der Drehachse 5 ein weiterer Klemmbacken 6 angebracht sein.

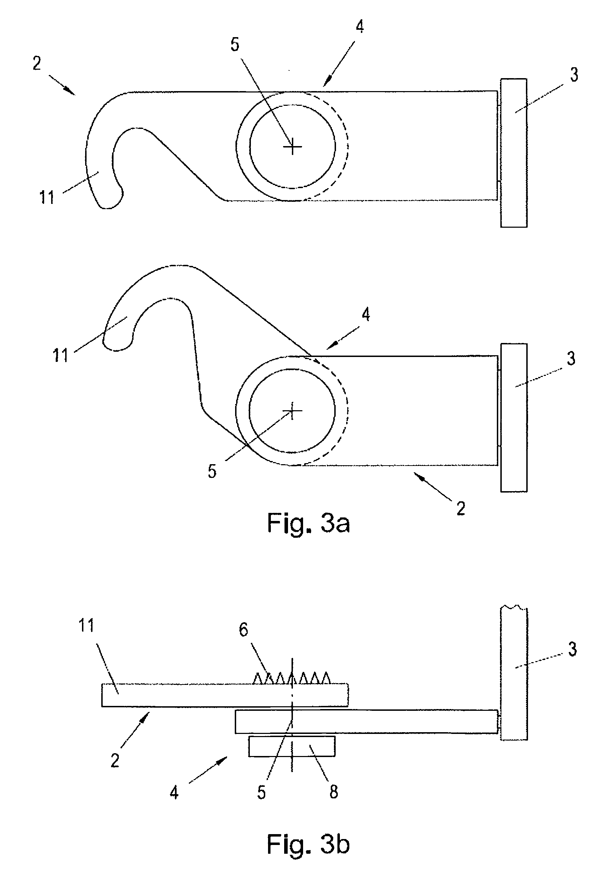

Fig. 3a und 3b zeigen weitere Ausführungsbeispiele der erfindungsgemäßen Mehrzweckvorrichtung. Die Mehrzweckvorrichtung 1 ist in Form eines Brillengestells mit Tragteilen 2 und einer Sehhilfe 3 ausgeführt. Am Tragteil 2 ist eine Spannvorrichtung 4 angebracht. Die Spannvorrichtung 4 ist drehbar entlang der Drehachse 5 mit dem Tragteil 2 verbunden. Der Spannbügel ist in diesem Ausführungsbeispiel in Form eines schwenkbar gelagerten Ohrbügels 11 ausgeführt, der schwenkbar an den Tragteilen 2 angebracht oder anbringbar ist. Im Inneren der Anordnung ist eine (nicht dargestellte) Drehfeder angeordnet, die den Ohrbügel 11 gegen einen Anschlag nach unten spannt. Beim Aufsetzen der Brille wird der Ohrbügel 11 gegen die Federkraft nach oben geklappt, wie in der unteren Darstellung der Fig. 3a gezeigt ist.
Die Klemmbacken 6, die auf dem Ohrbügel 11 im Bereich des Gelenks 5 angebracht sind, werden durch den Benutzer an die Haut im Bereich der Jochbeinmuskeln angelegt, und beim Loslassen der Ohrbügel 11 spannen die Klemmbacken 6 die Gesichtsmuskulatur in die gewünschte Richtung. Zusätzlich dienen die Ohrbügel 11 in gewohnter Weise zur Halterung der Brille. Ein Querschnitt durch diese Ausführungsform der Erfindung ist in Fig. 3b gezeigt, wobei auch der Drehgriff 8 und der Klemmbacken 6 sichtbar ist. Der Ohrbügel 11 kann durch Betätigung des Drehgriffs 8 angezogen werden.

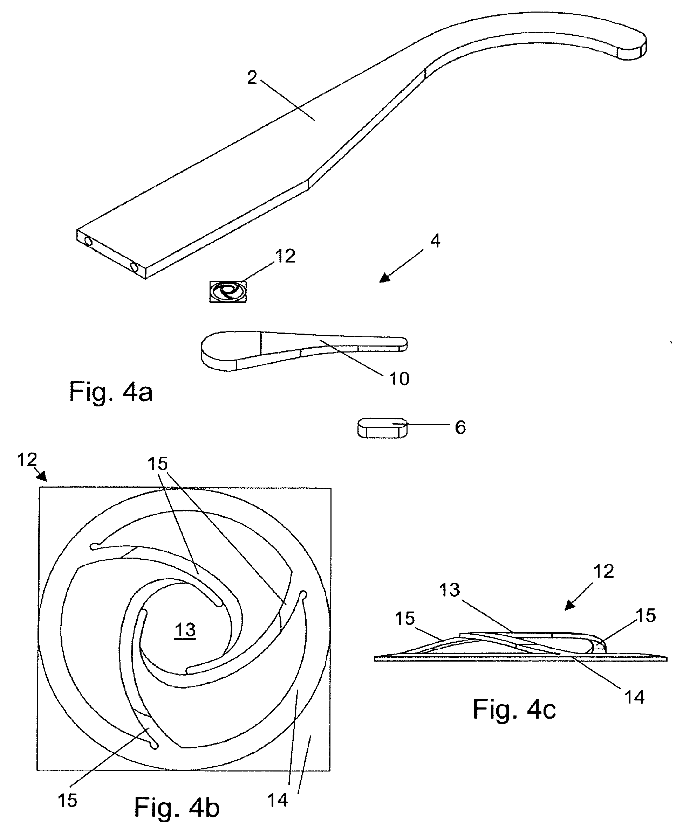

Fig. 4a bis Fig. 4c zeigen eine Ausführungsform des Tragbügels einer erfindungsgemäßen Mehrzweckvorrichtung. Als Federelement ist eine Drehdruckfeder 12 vorgesehen. Die Drehdruckfeder 12 umfasst einen Rahmen 14, der außen liegt und eine Befestigungsplatte 13, die mit dem Rahmen 14 über drei flexible Arme 15 verbunden ist. Die Drehdruckfeder 12 ist aus einem elastischen Federstahl gefertigt, beispielsweise ausgestanzt. Die Befestigungsplatte 13 wird am Tragteil 2 befestigt, beispielsweise geklebt oder angeschraubt.

Die Drehbewegung des frei beweglichen Rahmens 14 wird durch Druck bewirkt. Es muss somit lediglich Druck auf den Rahmen 14 ausgeübt werden und keine Drehbewegung wie im Fall einer Spiraldrehfeder. Der Rahmen 14 ist am Spannbügel 10 angebracht, beispielsweise angelötet, oder einstückig mit diesem ausgeführt.

Die Befestigungsplatte 13 kann kraftschlüssig durch eine zentrale Schraube oder durch Lagestabilisierung mit mehreren Schrauben oder formschlüssig durch eine Vierkantbohrung oder dergleichen am Tragteil 2 befestigt werden. Der Rahmen 14 kann ebenfalls in entsprechender Weise am Spannbügel 10 befestigt sein.

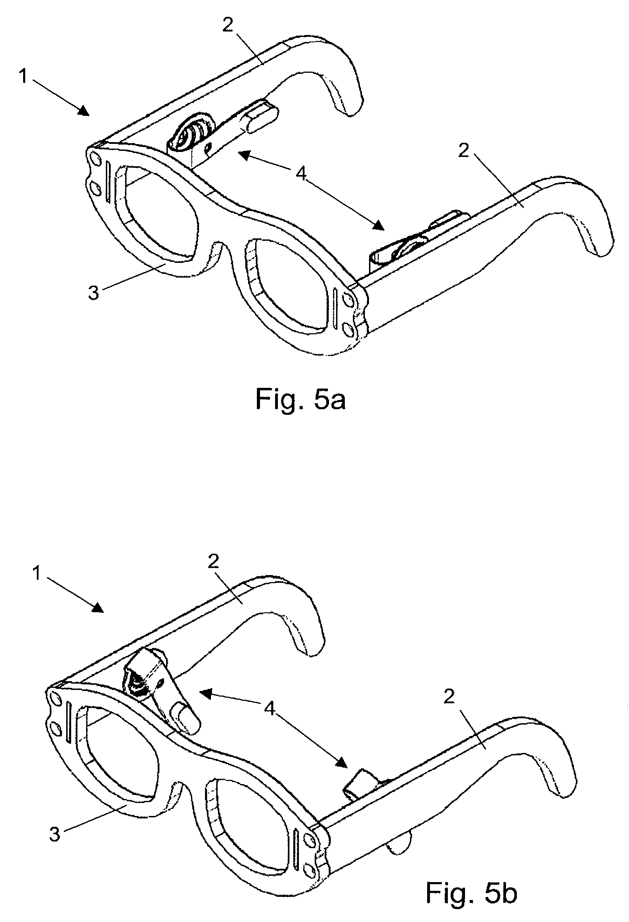

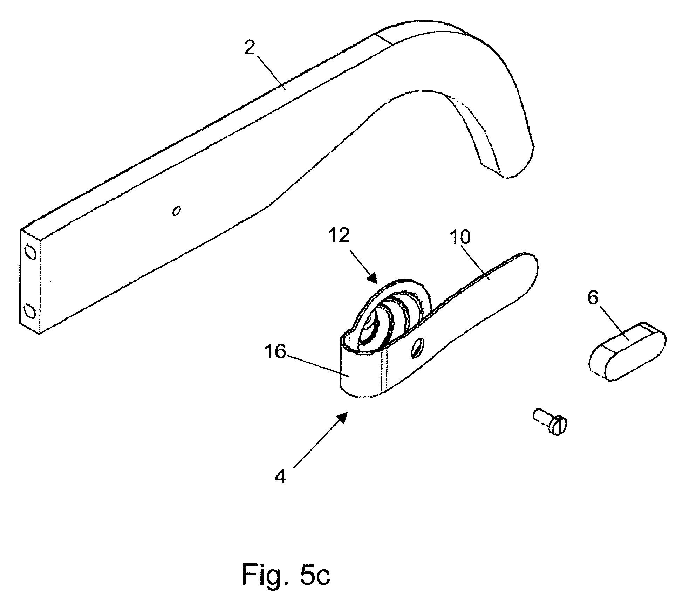

Figs. 5a - 5c zeigen ein weiteres Ausführungsbeispiel der erfindungsgemäßen Mehrzweckvorrichtung unter Verwendung einer Drehdruckfeder. In diesem Ausführungsbeispiel ist der Spannbügel 10 mit dem Federelement in Form der Drehdruckfeder 12 einstückig ausgeführt. Die Drehdruckfeder 12 ist auf den dem Kopf des Benutzers zugewandten Seiten der Tragteile 2 durch eine Schraubverbindung angebracht. Der Spannbügel 10 erstreckt sich vom äußeren Umfang des Rahmens der Drehdruckfeder über eine Verbiegung 16 in Richtung des Hinterkopfes des Benutzers und trägt den Klemmbacken 6. Die Verbiegung 16 erhöht die Verwindungssteifigkeit des Federstahls und sorgt für eine besonders gute Übertragung der Rotationskraft.

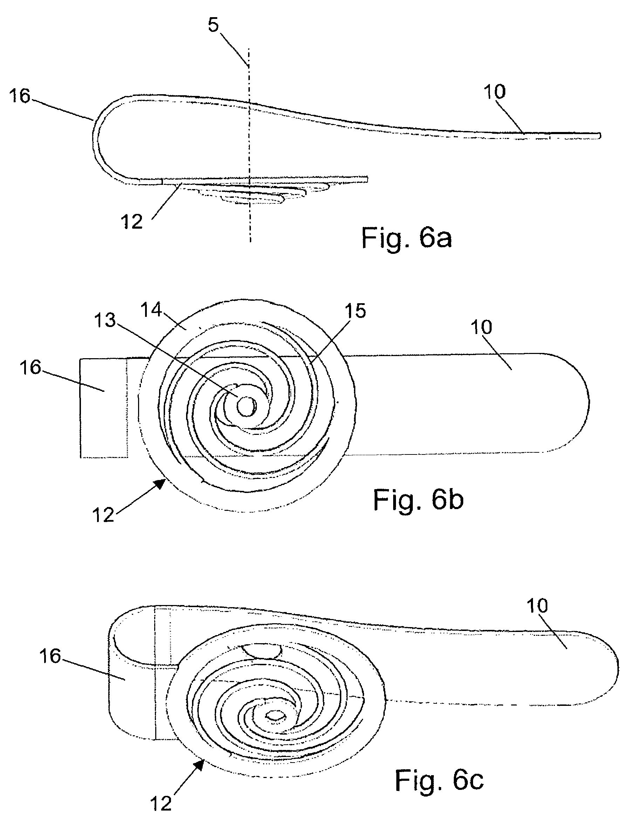

Figs. 6a - 6c zeigen Ansichten einer erfindungsgemäß Drehdruckfeder 12. Diese ist aus Federstahl gefertigt und einstückig mit dem Spannbügel 10 ausgeführt. Die Drehdruckfeder 12 weist eine zentrale Befestigungsplatte 13 und einen Rahmen 14 auf, wobei der Spannbügel 10 am Rahmen 14 angeformt ist.

Zwischen der Befestigungsplatte 13 und dem Rahmen 14 erstrecken sich drei elastische, spiralförmig gebogene Arme 15, wobei die Befestigungsplatte 13 in Richtung der Drehachse 5 der Drehdruckfeder von der Ebene des Rahmens 14 beabstandet angeordnet ist. Dadurch wird erreicht, dass beim Drücken des Rahmens 14 gegen die Befestigungsplatte 13 der Rahmen 14 eine rotatorische Bewegung ausführt, wobei der Winkelbereich dieser Bewegung sowie die ausgeübte Zug- und Druckkraft durch die Länge, Ausformung und Elastizität der Arme 15 bestimmt ist.

Der Spannbügel 10 ist mit dem Rahmen 14 der Drehdruckfeder 12 nicht in einer Ebene verbunden, sondern in einer beabstandeten Position, was dadurch erreicht wird, dass der Spannbügel 10, ausgehend vom Rahmen 14, eine etwa U-förmige Verbiegung 16 aufweist. Dies hat mehrere Vorteile. Zunächst wird dadurch die Verwindungssteifigkeit der Konstruktion erhöht. Weiters erlaubt eine derartige Konstruktion, die Position des Spannbügels und des daran befestigten Klemmbackens an den Benutzer anzupassen.

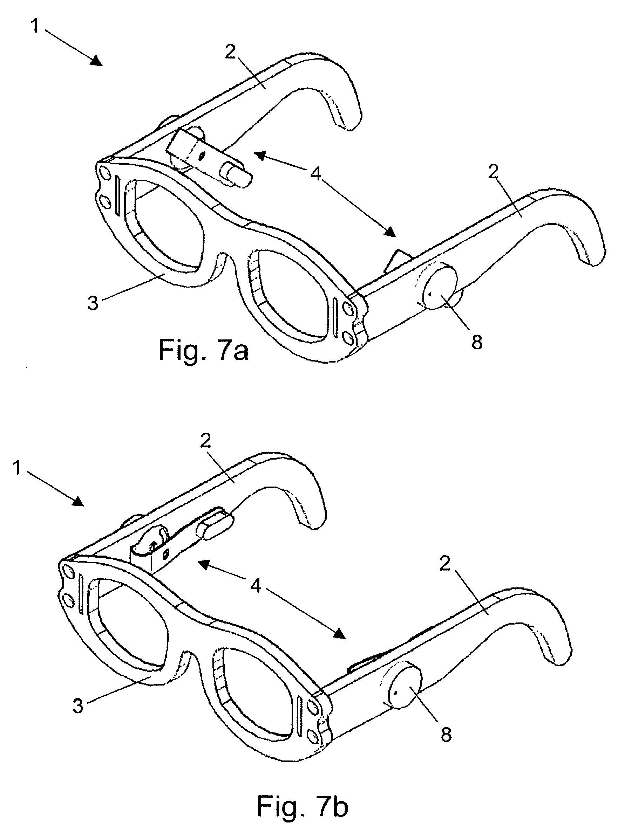

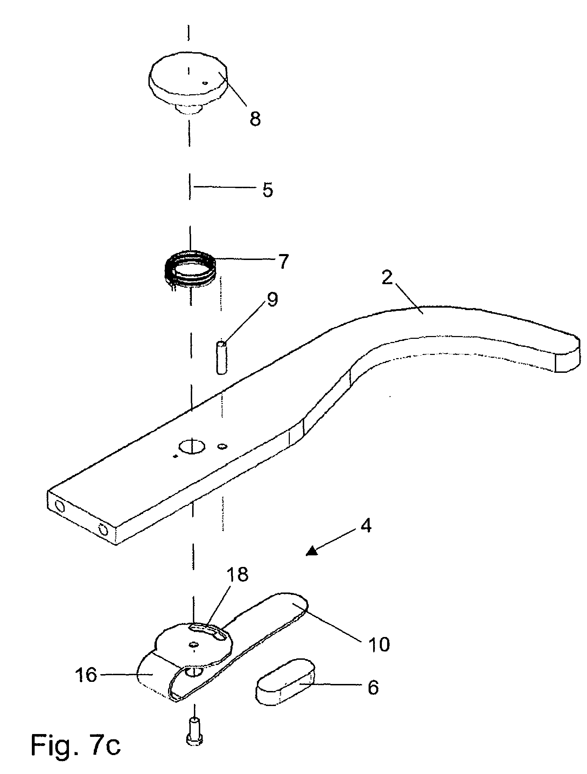

Figs. 7a - 7c zeigen ein weiteres Ausführungsbeispiel der erfindungsgemäßen Mehrzweckvorrichtung unter Verwendung einer Spiraldrehfeder. In diesem Ausführungsbeispiel ist die Spiraldrehfeder 7 auf der dem Kopf des Benutzers abgewandten Seite des Tragteiles 2 angeordnet. Ein Drehgriff 8 überdeckt die Spiraldrehfeder 7, sodass diese von außen nicht sichtbar ist. Die Spiraldrehfeder 7 greift einerseits in den Drehgriff 8 ein, und andererseits in den Tragteil 2, wobei der Drehgriff 8 mit dem Spannbügel 10 verbunden ist. Der Spannbügel 10 ist ähnlich geformt wie im Ausführungsbeispiel der Fig. 5a - 5c, weist jedoch keine Drehdruckfeder auf. Hingegen weist er ebenfalls eine Verbiegung 16 auf. Weiters ist im Spannbügel 10 eine Freistellung 18 vorgesehen, die mit einem Anschlag 9 in Form eines Stiftes zusammenwirkt, um die Rotationsbewegung des Spannbügels 10 zu begrenzen.

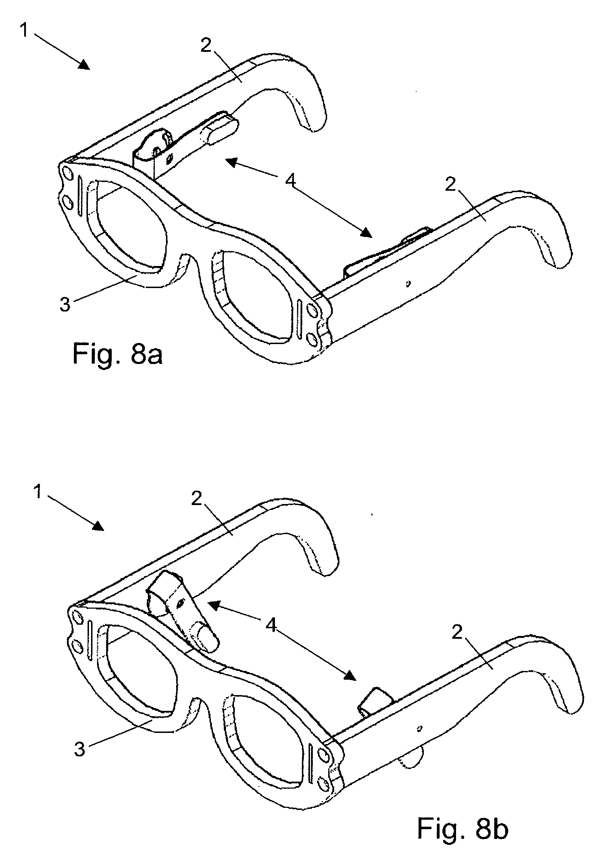

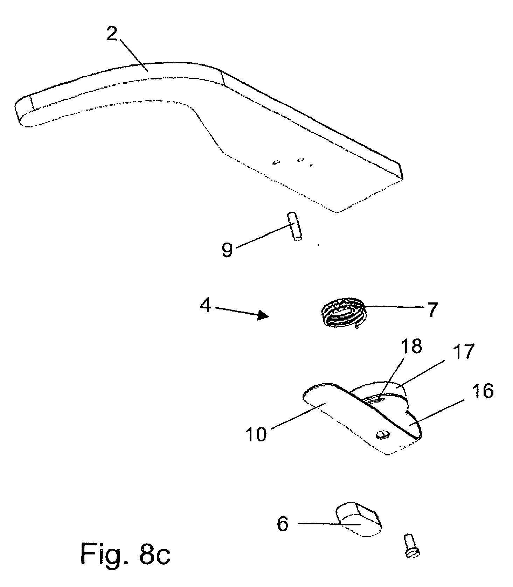

Figs. 8a - 8c zeigen ein weiteres Ausführungsbeispiel der erfindungsgemäßen Mehrzweckvorrichtung unter Verwendung einer Spiraldrehfeder. In diesem Ausführungsbeispiel ist die Spiraldrehfeder 7 auf der dem Kopf des Benutzers zugewandten Seite des Tragteiles 2 angeordnet, sodass diese von außen nicht sichtbar ist. Die Spiraldrehfeder 7 greift einerseits in den Spannbügel 10 ein, und andererseits in den Tragteil 2. Der Spannbügel 10 ist ähnlich geformt wie im Ausführungsbeispiel der Fig. 5a - 5c, weist jedoch keine Drehdruckfeder auf.

Der Spannbügel 10 weist ebenfalls eine Verbiegung 16 auf. Der Spannbügel 10 ist zur Abdeckung der Spiraldrehfeder 7 mit einer zylinderförmigen Buchse 17 versehen. Weiters ist im Spannbügel 10 eine Freistellung 18 vorgesehen, die mit einem Anschlag 9 in Form eines Stiftes zusammenwirkt, um die Rotationsbewegung des Spannbügels 10 zu begrenzen.

Die Erfindung ist nicht auf die vorliegenden Ausführungsbeispiele beschränkt. Es ist beabsichtigt, Ausführungsformen der vorliegenden Erfindung unter der Bezeichnung "Zeilinger Liftingbrille" zu vermarkten.

### Bezugszeichenliste

- 1: Mehrzweckvorrichtung
- 2: Tragteil
- 3: Sehhilfe
- 4: Spannvorrichtung
- 5: Drehachse
- 6: Klemmbacken
- 7: Spiraldrehfeder
- 8: Drehgriff
- 9: Anschlag
- 10: Spannbügel
- 11: Ohrbügel
- 12: Drehdruckfeder
- 13: Befestigungsplatte
- 14: Rahmen
- 15: Arm
- 16: Verbiegung
- 17: Buchse
- 18: Freistellung

## Patentansprüche

1. Mehrzweckvorrichtung (1) mit einem oder mehreren am Kopf eines Benutzers anlegbaren Tragteilen (2) und vorzugsweise mit einer Sehhilfe (3) und/oder einer Hörhilfe, wobei zumindest ein Tragteil (2) eine Spannvorrichtung (4) zur Straffung der Gesichtshaut des Benutzers aufweist, wobei die Spannvorrichtung (4) mit dem Tragteil (2) verbunden oder verbindbar und um eine Drehachse (5) schwenkbar ist, **dadurch gekennzeichnet, dass** die Spannvorrichtung (4) einen Spannbügel (10) und ein den Spannbügel (10) spannendes Federelement umfasst, wobei der Spannbügel (10) auf der dem Kopf des Benutzers zugewandten Seite des Tragteils (2) angeordnet ist und das Federelement einerseits mit dem Tragteil (2) und andererseits mit dem Spannbügel (10) in Eingriff steht.

2. Mehrzweckvorrichtung nach Anspruch 1, **dadurch gekennzeichnet, dass** das Federelement als Spiraldrehfeder (7) ausgeführt ist.

3. Mehrzweckvorrichtung nach Anspruch 1, **dadurch gekennzeichnet, dass** das Federelement als Drehdruckfeder (12) ausgeführt ist.

4. Mehrzweckvorrichtung nach einem der vorhergehenden Ansprüche, **dadurch gekennzeichnet, dass** das Federelement an der dem Kopf des Benutzers zugewandten Seite des Tragteils (2) angeordnet ist.

5. Mehrzweckvorrichtung nach einem der Ansprüche 1 bis 3, **dadurch gekennzeichnet, dass** das Federelement auf der dem Kopf des Benutzers abgewandten Seite des Tragteils (2) angeordnet ist und ein, das Federelement überdeckendes, mit dem Spannbügel (10) in Eingriff stehendes Betätigungselement, insbesondere in Form eines Drehgriffs (8), vorgesehen ist.

6. Mehrzweckvorrichtung nach einem der Ansprüche 3 bis 5, **dadurch gekennzeichnet, dass** die Drehdruckfeder (12) eine innenliegende Befestigungsplatte (13), einen Rahmen (14) sowie vorzugsweise drei Arme (15) umfasst, welche die Befestigungsplatte (13) mit dem Rahmen (14) verbinden.

7. Mehrzweckvorrichtung nach Anspruch 6, **dadurch gekennzeichnet, dass** die Drehdruckfeder (12) an der Befestigungsplatte (13) mit dem Tragteil (2) der Mehrzweckvorrichtung verbunden ist, und an ihrem Rahmen (14) mit dem Spannbügel (10) verbunden ist.

8. Mehrzweckvorrichtung nach einem der Ansprüche 3 bis 7, **dadurch gekennzeichnet, dass** die Drehdruckfeder (12) mit dem Spannbügel (10) einstückig ausgeführt ist.

9. Mehrzweckvorrichtung nach einem der vorhergehenden Ansprüche, **dadurch gekennzeichnet, dass** der Spannbügel (10) einen Draht, Kunststoff oder ein Blech umfasst, und/oder dass die Drehdruckfeder (12) einen Draht, ein Blech, einen Federstahl oder Kunststoff umfasst.

10. Mehrzweckvorrichtung nach einem der vorhergehenden Ansprüche, **dadurch gekennzeichnet, dass** der Spannbügel (10) eine zur Versteifung dienende U-förmige Verbiegung (16) aufweist.

11. Mehrzweckvorrichtung nach einem der vorhergehenden Ansprüche, **dadurch gekennzeichnet, dass** ein Anschlag (9), vorzugsweise in Form eines Stiftes, vorgesehen ist, der in eine entsprechende Ausnehmung des Spannbügels (10) eingreift, um dessen Schwenkbewegung zu begrenzen.

12. Mehrzweckvorrichtung nach einem der vorhergehenden Ansprüche, **dadurch gekennzeichnet, dass** die Spannvorrichtung (4) abnehmbar am Tragteil (2) befestigbar, insbesondere aufschraubbar oder vorzugsweise mit einem Bügel aufsteckbar ist.

13. Mehrzweckvorrichtung nach einem der vorhergehenden Ansprüche, **dadurch gekennzeichnet, dass** der Spannbügel (10) zumindest einen Klemmbacken (6) aufweist.

14. Mehrzweckvorrichtung nach einem der vorhergehenden Ansprüche, **dadurch gekennzeichnet, dass** der Spannbügel (10) in Form eines Ohrbügels (11) ausgeführt ist, der schwenkbar an den Tragteilen (2) angebracht oder anbringbar ist.

15. Mehrzweckvorrichtung nach einem der vorstehenden Ansprüche, **dadurch gekennzeichnet, dass** die Mehrzweckvorrichtung (1) als Brillengestell ausgeführt ist.

## Claims

1. A multi-purpose device (1) having one or more support parts (2), which can be placed on the head of a user, and preferably having a visual aid (3) and/or a hearing aid, at least one support part (2) having a tensioning device (4) for tightening the skin of the user's face, the tensioning device (4) being connected or connectible to the support part (2) and pivotable about a rotation axis (5), **characterised in that** the tensioning device (4) comprises a tensioning bracket (10) and a spring element that tensions the tensioning bracket (10), wherein the tensioning bracket (10) is arranged on the side of the support part (2) that faces the head of the user, and the spring element is in engagement with the support part (2) on one side and with the tensioning bracket (10) on the other side.

2. The multi-purpose device according to Claim 1, **characterised in that** the spring element is in the form of a spiral rotary spring (7).

3. The multi-purpose device according to Claim 1, **characterised in that** the spring element is in the form of a rotary compression spring (12).

4. The multi-purpose device according to any one of the preceding claims, **characterised in that** the spring element is arranged on the side of the support part (2) that faces the head of the user.

5. The multi-purpose device according to any one of Claims 1 to 3, **characterised in that** the spring element is arranged on the side of the support part (2) that faces away from the head of the user, and an operating element, in particular in the form of a knob (8), is provided, which covers the spring element and is in engagement with the tensioning bracket (10).

6. The multi-purpose device according to any one of Claims 3 to 5, **characterised in that** the rotary compression spring (12) comprises an inner fastening plate (13), a frame (14) and preferably three arms (15), which connect the fastening plate (13) to the frame (14).

7. The multi-purpose device according to Claim 6, **characterised in that** the rotary compression spring (12) is connected at the fastening plate (13) to the support part (2) of the multi-purpose device and is connected at the frame (14) of the rotary compression spring to the tensioning bracket (10).

8. The multi-purpose device according to any one of Claims 3 to 7, **characterised in that** the rotary compression spring (12) is integral with the tensioning bracket (10).

9. The multi-purpose device according to any one of the preceding claims, **characterised in that** the tensioning bracket (10) comprises a wire, plastic or a sheet metal, and/or that the rotary compression spring (12) comprises a wire, a sheet metal, a spring steel or plastic.

10. The multi-purpose device according to any one of the preceding claims, **characterised in that** the tensioning bracket (10) has a U-shaped bend (16) that serves for stiffening.

11. The multi-purpose device according to any one of the preceding claims, **characterised in that** a stop (9), preferably in the form of a pin, is provided, which engages in a corresponding recess in the tensioning bracket (10) in order to limit the pivoting movement thereof.

12. The multi-purpose device according to any one of the preceding claims, **characterised in that** the tensioning device (4) can be fastened detachably to, in particular screw-fastened to or preferably fitted with a bracket onto the support part (2).

13. The multi-purpose device according to any one of the preceding claims, **characterised in that** the tensioning bracket (10) has at least one clamping jaw (6).

14. The multi-purpose device according to any one of the preceding claims, **characterised in that** the tensioning bracket (10) is in the form of an ear hook (11), which is attached or can be attached pivotably to the support parts (2).

15. The multi-purpose device according to any one of the preceding claims, **characterised in that** the multi-purpose device (1) is in the form of a spectacle frame.

## Revendications

1. Dispositif à usages multiples (1) avec une ou plusieurs pièces de support (2) pouvant être appuyées sur la tête d'un utilisateur et de préférence avec un élément d'assistance optique (3) et/ou un élément d'assistance auditif, une pièce de support (2) comportant au moins un dispositif de serrage (4) pour agir en tension sur la peau du visage de l'utilisateur, le dispositif de serrage (4) étant relié ou pouvant être relié avec la pièce de support (2) et pouvant pivoter autour d'un axe de rotation (5), **caractérisé en ce que** le dispositif de serrage (4) comprend un étrier de fixation (10) et un élément à ressort tendant l'étrier de fixation (10), l'étrier de fixation (10) étant disposé sur le côté de la pièce de support (2) tourné vers la tête de l'utilisateur et l'élément à ressort vient en prise d'une part avec la pièce de support (2) et d'autre part avec l'étrier de fixation (10).

2. Dispositif à usages multiples selon la revendication 1, **caractérisé en ce que** l'élément à ressort est exécuté comme un ressort hélicoïdal (7) .

3. Dispositif à usages multiples selon la revendication 1, **caractérisé en ce que** l'élément à ressort est exécuté comme un ressort de pression rotatif (12).

4. Dispositif à usages multiples selon l'une quelconque des revendications précédentes, **caractérisé en ce que** l'élément à ressort est disposé sur le côté de la pièce de support (2) tourné vers la tête de l'utilisateur.

5. Dispositif à usages multiples selon l'une quelconque des revendications 1 à 3, **caractérisé en ce que** l'élément à ressort est disposé sur le côté de la pièce de support (2) opposé à la tête de l'utilisateur et un élément de commande, recouvrant l'élément à ressort, venant en prise avec l'étrier de fixation (10), est prévu, en particulier sous la forme d'un bouton de commande rotatif (8).

6. Dispositif à usages multiples selon l'une quelconque des revendications 3 à 5, **caractérisé en ce que** le ressort de pression rotatif (12) comprend une plaque de fixation (13) se trouvant à l'intérieur, un cadre (14) ainsi de préférence que trois branches (15) qui relient la plaque de fixation (13) au cadre (14).

7. Dispositif à usages multiples selon la revendication 6, **caractérisé en ce que** le ressort de pression rotatif (12) sur la plaque de fixation (13) est relié à la pièce de support (2) du dispositif à usages multiples et est relié sur son cadre (14) à l'étrier de fixation (10).

8. Dispositif à usages multiples selon l'une quelconque des revendications 3 à 7, **caractérisé en ce que** le ressort de pression rotatif (12) est exécuté en une pièce avec l'étrier de fixation (10) .

9. Dispositif à usages multiples selon l'une quelconque des revendications précédentes, **caractérisé en ce que** l'étrier de fixation (10) comprend un fil, de la matière plastique ou une tôle, et/ou **en ce que** le ressort de pression rotatif (12) comprend un fil, une tôle, un acier à ressort ou de la matière plastique.

10. Dispositif à usages multiples selon l'une quelconque des revendications précédentes, **caractérisé en ce que** l'étrier de fixation (10) comporte une déformation en forme de U (16) servant à la rigidification.

11. Dispositif à usages multiples selon l'une quelconque des revendications précédentes, **caractérisé en ce qu'**une butée (9) est prévue, de préférence sous la forme d'un axe, qui vient en prise dans un évidement de l'étrier de fixation (10) pour en limiter son mouvement de pivotement.

12. Dispositif à usages multiples selon l'une quelconque des revendications précédentes, **caractérisé en ce que** le dispositif de serrage (4) peut être fixé de manière amovible sur la pièce de support (2), en particulier de manière à pouvoir être vissé ou de préférence pouvant être emboîté avec un étrier.

13. Dispositif à usages multiples selon l'une quelconque des revendications précédentes, **caractérisé en ce que** l'étrier de fixation (10) comporte au moins une mâchoire de serrage (6).

14. Dispositif à usages multiples selon l'une quelconque des revendications précédentes, **caractérisé en ce que** l'étrier de fixation (10) est exécuté sous la forme d'un étrier auriculaire (11) qui est monté ou peut être monté de manière à pouvoir pivoter sur les pièces de support (2).

15. Dispositif à usages multiples selon l'une quelconque des revendications précédentes, **caractérisé en ce que** le dispositif à usages multiples (1) est exécuté comme une monture de lunettes.
